Europäisches Patentamt

European Patent Office

Office européen des brevets

(19)

(11) Veröffentlichungsnummer: **0 147 521**
**B1**

(12) **EUROPÄISCHE PATENTSCHRIFT**

(45) Veröffentlichungstag der Patentschrift: **01.08.90**

(51) Int. Cl.⁵: **F 23 N 5/00**, G 01 N 27/64

(21) Anmeldenummer: **84109594.6**

(22) Anmeldetag: **11.08.84**

(54) Verfahren zur Regelung von Verbrennungsprozessen.

(30) Priorität: 24.08.83 DE 3330509

(43) Veröffentlichungstag der Anmeldung:
10.07.85 Patentblatt 85/28

(45) Bekanntmachung des Hinweises auf die
Patenterteilung:
01.08.90 Patentblatt 90/31

(84) Benannte Vertragsstaaten:
AT BE CH DE FR GB IT LI LU NL SE

(56) Entgegenhaltungen:
DE-A-2 211 720
DE-A-2 537 199
US-A-3 881 111

JOURNAL OF APPLIED PHYSICS, Band 53, Nr. 5,
Mai 1982, Seiten 3787-3791, New York, USA; H.
BURTSCHER et al.: "Probing aerosols by
photoelectric charging"

(73) Patentinhaber: Matter + Siegmann AG
Obere Haldenstrasse 65
CH-5610 Wohlen (CH)

(72) Erfinder: Burtscher, Heinz
Florastrasse 16
CH-8008 Zürich (CH)
Erfinder: Schmidt-Ott, Andreas
Kürbergstrasse 7
CH-8049 Zürich (CH)
Erfinder: Siegmann, Hans-Christoph
Kürbergstrasse 24
CH-8049 Zürich (CH)

(74) Vertreter: Lauer, Joachim, Dr.
Hug Interlizenz AG Austrasse 44 Postfach
CH-8045 Zürich (CH)

## Beschreibung

Die vorliegende Erfindung betrifft ein Verfahren zur Regelung von Verbrennungsprozessen gemäß dem Oberbegriff des Anspruchs 1.

Holz, Kohle, Erdgas, Erdöl und andere organische Stoffe werden in privaten und gewerblichen Feuerungsanlagen und Wärmekraftmaschinen in grossem Massstab verbrannt. Führt man der Verbrennung zuviel Luft oder Sauerstoff zu, so tritt ein Verlust auf, weil die überschüssige Luftmenge Wärme abführt. Führt man zu wenig Luft zu, so bildet sich neben Russ das giftige Kohlenmonoxyd und ausserdem Kohlenwasserstoffe, unter diesen einige hochkarzinogene Arten, wie z.B. das Benzpyren. Die zunehmende Verunreinigung der Luft mit karzinogenen Stoffen stellt eine sehr ernsthafte Bedrohung der Öffentlichkeit dar. Zur Vermeidung der mit der Bildung dieser Schadstoffe ausserdem verbundenen Explosionsgefahr müssen insbesondere Heizungsanlagen und Automobile ohne katalytische Nachverbrennung stets mit einem gewissen Luftüberschuss betrieben werden. Auf der anderen Seite will man aber die kostbaren Brennstoffe durch einen zu grossen Luftüberschuss nicht unnötig verschwenden.

Es ist schon lange bekannt, dass das Brennstoff-Luftverhältnis λ für den Ablauf der Verbrennung wesentlich ist. Der Wirkungsgrad und die Schadstoffemission von Verbrennungsmotoren und Feuerungsanlagen ist durch λ bestimmt. Genau ist λ durch das Verhältnis

$$\lambda = n_{O_2} \text{ (real)}/n_{O_2} \text{ (ideal)}$$

definiert. Hierbei ist $n_{O_2}$ (real) die tatsächlich zugeführte Luft- oder Sauerstoffmenge und $n_{O_2}$ (ideal) die für eine vollständige Verbrennung notwendige Luft- oder Sauerstoffmenge. Für Automobile ohne katalytische Nachverbrennung und für Heizungsanlagen sind optimale Betriebsbedingungen im allgemeinen dann gegeben, wenn λ = 1.2 beträgt. Bei λ = 1.1 tritt Schadstoffemission und Explosionsgefahr auf, und für λ = 1.3 reduziert sich der Wirkungsgrad. Die optimalen λ — Werte sind jedoch von Fall zu Fall verschieden. Sie hängen vom Typ der Wärmekraftmaschine bzw. Feuerungsanlage und vom Brennmaterial ab.

Es ist weiterhin bekannt, dass man z.B. mit einer Zirkonoxid-Sauerstoffsonde die Luftzahl λ automatisch regulieren kann. Damit wurden z.B. bei Heizungsanlagen 5—10% Brennstoff eingespart und zugleich die Abgaswerte deutlich verbessert. Die Nachteile der Zirkonoxid-Sauerstoffsonde bestehen darin, dass sie durch Blei und andere möglicherweise im Abgas enthaltenen Stoffe in ihrer Funktion beeinträchtigt wird und damit nur mit bestimmten Brennmaterialien verwendet werden kann. Eine dem Abgas ausgesetzte Elektrode muss mit poröser Keramik geschützt werden; es tritt die Gefahr der Verschmutzung auf. Weiterhin ist die Diffusion des $O_2$ durch die Keramik besonders bei niedrigen Temperaturen relativ langsam, so dass der Regulierzyklus ebenfalls entsprechend langsam ist. Dazu kommt noch, dass ein temperaturunabhängiges Schaltsignal nur bei der Luftzahl λ = 1 auftritt. Für Verbrennungsanlagen und Kraftfahrzeuge ohne katalytische Nachverbrennung muss daher durch Zutitrieren von $H_2$ der beim optimalen λ vorhandene überschüssige Sauerstoff zuerst entfernt werden, bevor das Abgas der Festelektrolytsonde zugeführt wird. Dies bedingt einen relativ komplexen und entsprechend kostspieligen Mechanismus, der bisher nur in grossen Verbrennungsanlagen eingesetzt werden konnte.

Ein Verfahren der eingangs genannten Art ist aus der US—A—3 881 111 bekannt. Das bekannte Verfahren dient zum Nachweis von Stickoxid im Verbrennungs-Abgas. Entsprechend dem Ionisierungspotential von Stickoxid von 9,25 eV wird eine Ultraviolett-Lichtquelle verwendet, welche ultraviolettes Licht im Wellenlängenbereich zwischen 1,2 und 1,3 Å liefert.

Aus einem Artikel von Burtscher et al in Journal of Applied Physics, Band 53, Nr. 5, Mai 1982, Seiten 3787—3791, New York, USA ist die photoemmissive Aufladung von Aerosolpartikeln durch UV-Strahlung entsprechend einer Photoenergie von 4,9 eV zur Feststellung von Partikelgrösse und Partikeldichte in Aerosol bekannt.

Es ist die Aufgabe der vorliegenden Erfindung, ein einfaches und zuverlässiges Verfahren zur Regelung von Verbrennungs-prozessen vorzuschlagen, wobei als Grundlage die Regulierung der Luftzahl λ dient. Erfindungsgemäss wird diese Aufgabe durch ein Verfahren mit den Merkmalen des Patentanspruchs 1 gelöst. Generell wird von der Erkenntnis ausgegangen, dass bei ungenügender Luftzufuhr nicht ganz verbrannte, d.h. oxidierbare Substanzen oder Radikale im Abgas auftreten. Solche Substanzen haben bekanntlich die Tendenz, Elektronen abzugeben, d.h. die Ionisierungs- oder Austrittsarbeit für Elektronen ist relativ gering. Zum Nachweis dieser Substanzen bzw. Radikale wird von der bekannten elektrischen Aufladung der Schwebeteilchen mittels Photoemission von Elektronen Gebrauch gemacht, wie es grundsätzlich in den Publikationen "Atmospheric Environment, Vol. 17, No. 3, pp. 665—657, 1983" und "J. Appl. Phys. 53(5), May 1982, pp. 3787—3791" beschrieben ist. Mit Hilfe der photoelektrischen Aufladung lassen sich nämlich allerfeinste, optisch noch nicht feststellbare Schwebeteilchen mit niedriger photoelektrischer Austrittsarbeit effizient und selektiv, d.h. auch in Anwesenheit anderer Partikel und Materialien, nachweisen. Das Auftreten der genannten Partikel im Abgas einer Verbrennung ist dann ein Signal für Sauerstoffmangel und kann somit zur Regulierung der Luftzahl λ dienen.

Als möglicher Mechanismus für die Entstehung feinster Teilchen mit niedriger photoelektrischer Austrittsarbeit wird ein schalenartiges Wachstum der feinsten Schwebeteilchen des Abgases vorgeschlagen. Demnach bildet sich zuerst der schwerflüchtige Kohle-bzw. Aschkern der Teilchen in den heissen Zonen der Verbrennung. Beim Abwan-

dern in die kälteren Zonen kondensieren auf diesen Kernen die leichter flüchtigen Kohlenwasserstoffe und ihre Radikale, falls sie wegen ungenügender Luftzfuhr vorhanden sind. Die Kohlenwasserstoffkondensate erniedrigen nun entweder die photoelektrische Austrittsarbeit der Teilchen oder besitzen selbst ein niedriges Ionisierungspotential, so dass das Agglomerat bei Bestrahlen mit ultraviolettem Licht elektrisch aufgeladen wird und damit in der Lage ist, in einem Detektor ein entsprechendes Signal zu erzeugen. Es ist wichtig zu bemerken, dass besonders die weniger stabilen und damit besonders giftigen Kohlenwasserstoffe und ihre Fragmente leicht Elektronen abgeben und damit effektiv und mit unerhört hoher Empfindlichkeit nachgewiesen werden können. Unter Umständen muss nur ein Bruchteil der Oberfläche eines ultrafeinen, noch nicht sichtbaren Teilchens mit einer einatomigen Schicht der genannten instabilen Kohlenwasserstoffe bedeckt sein, damit die photoelektrische Aufladung eintreten kann.

Weiterhin wurde beobachtet, dass mindestens einige Teilchen mit niedriger photoelektrischer Austrittsarbeit beim Abkühlen der Abgase unter den Taupunkt überleben. Es ist also möglich, die photoelektrische Aufladung der Teilchen erst nach dem Abkühlen der Abgase und nach dem Ausscheiden flüssiger oder nebelförmiger Kondensate durchzuführen. Grössere Abgasteilchen ab etwa 1 μm Durchmesser lassen sich wegen Rückdiffusion der Photoelektronen sowieso kaum aufladen und können daher zur Vermeidung der Verschmutzung einer Sonde ohne weiteres vor der photoelektrischen Aufladung durch ein gröberes Filter aussortiert weren.

In der Verbrennung bereits elektrisch aufgeladene Teilchen können zur Vermeidung eines Hintergrundsignals ebenfalls vor der photoelektrischen Aufladung in einem bekannten, elektrischen Vorfilter ausgeschieden werden.

Die durch lichtelektrische Ladungstrennung erzeugten, positiven und negativen Ladungsträger können auch nach ihrer Grösse sortiert und einem Messwertaufnehmer zugeführt werden, so dass nur eine bestimmte Ladungs- oder Grössenklasse bzw. ein Auschnitt aus dem Grössenspektrum vom Messwertaufnehmer erfasst wird.

Die Sortierung kann mit Hilfe von Trägheitskraften in einer Diffusionsstrecke und/oder mittels eines elektrischen Gleichoder Wechselfeldes erfolgen.

Die als Messwertgrösse herangezogene, relative oder absolute Menge der erzeugten Ladungsträger und/oder die relative oder absolute Grösse des durch diese Ladungsträger erzeugten Stromes kann in Abhängigkeit vom Verbrennungsvorgang und/oder Brennstoff verändert werden.

Andererseits kann auch die Intensität und/oder die Zeitdauer der Einwirkung des ultravioletten Lichtes auf das Abgas verändert werden.

Schliesslich kann die Geschwindigkeit und/oder das Volumen des dem ultravioletten Licht ausgesetzten Abgasanteils verändert werden.

Im folgenden wird ein Ausführungsbeispiel des erfindungsgemässen Verfahrens näher erläutert, wobei auf die beiliegende Zeichnung Bezug genommen wird, in der eine beispielsweise Darstellung einer Anordnung zur Durchführung des erfindungsgemäsen Verfahrens in einem schematischen Längsschnitt gezeigt ist.

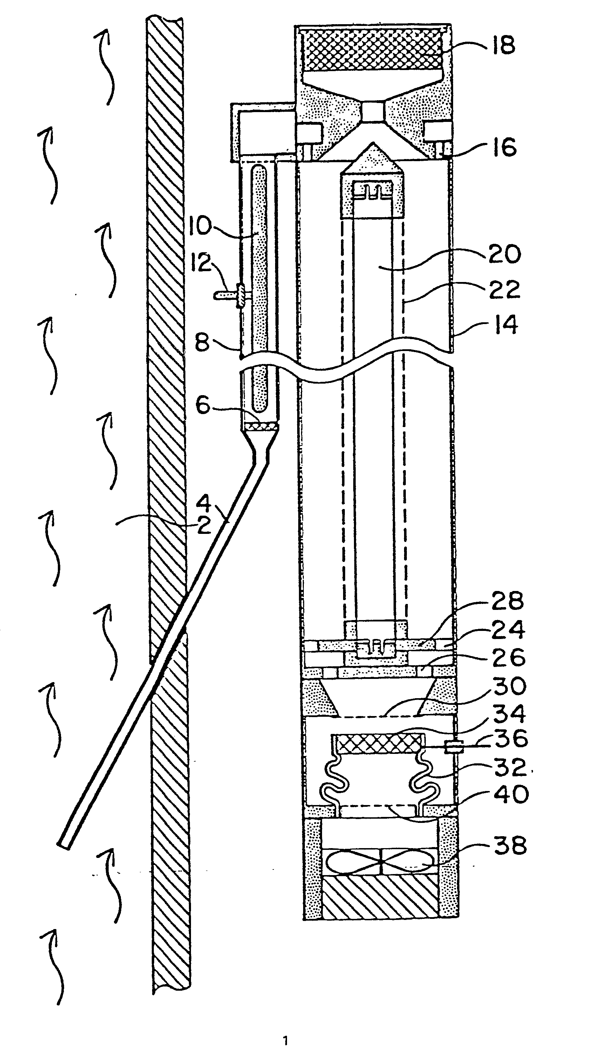

Die in Fig. 1 gezeigte Anordnung ist vor allem zur Regelung der Luftzahl λ in einer mit Oel betriebenen Heizungsanlage geeignet.

Abgas wird über das Ansaugrohr 4 aus dem Kamin 2 entnommen. Das Ansaugrohr 4 ist entsprechend der gewählten Ansauggeschwindigkeit so lang, dass die Abgase nach Austritt aus dem Kamin 2 praktisch auf Umgebungstemperatur abkühlen. Das Ansaugrohr 4 ist auch nicht horizontal aufgestellt, so dass eventuelle Kondensate wieder in den Kamin 2 zurücktropfen können. Das Filter 6 hält grobe Teilchen zurück. Im darauf folgenden Rohr 8 wird konzentrisch ein metallischer Zylinder 10 elektrisch isoliert gehalten. Legt man über die Durchführung 12 eine elektrische Gleichspannung an den Zylinder 10 gegenüber dem Rohr 8, so entsteht ein zur Strömung des Abgases senkrechtes elektrisches Feld, das die geladenen Teilchen aus dem Abgasstrom herausfiltert. Der so vorbehandelte Abgasstrom tritt nun über die am äusseren Rand eines grösseren Rohres 14 ringförmig verteilten Löcher 16 zu einem Strom gereinigter Aussenluft. Die Aussenluft wird durch Ansaugen über das Filter 18 gereinigt.

Abgas und gereinigte Aussenluft strömen nun laminar durch das Rohr 14, in dessen Mitte konzentrisch die Lichtquelle 20 montiert ist. Die Lichtquelle 20 ist eine handelsübliche Quecksilberniederdrucklampe, welche im wesentlichen ultraviolettes Licht der Energie 4.9 eV liefert. Die Lichtquelle 20 ist zur Abschirmung elektrischer Störfelder mit einem leitenden Netz 22 umgeben. Wegen der laminaren Strömung kann der am äusseren Rand des Rohres 14 verlaufende, teilchentragende Abgasstrom die Lampe nicht verschmutzen. Durch das ultraviolette Licht werden nun aus den Teilchen Photoelektronen emittiert, falls ihre Austrittsarbeit unterhalb 4.9 eV liegt. Auf Grund der zwischen 22 und 14 angelegten Wechselspannung stossen diese Elektronen bzw. die aus ihnen eventuell gebildeten negativen Kleinionen auf die Elektroden 22 oder 14 und werden so durch Absorption bzw. Neutralisation aus dem Gasstrom entfernt. Amplitude und Frequenz der Wechselspannung ist aber so gewählt, dass die zurückbleibenden positiv geladenen Teilchen auf Grund ihrer im Vergleich zu den Elektronen bzw. den aus ihnen gebildeten Kleinionen geringen elektrischen Beweglichkeit nur eine Zitterbewegung sehr kleiner Amplitude ausführen und daher ihre Mehrzahl im Strom verbleibt.

Die Schwebeteilchen werden nun vom Gasstrom über die Löcher 24 und 26 aus der Ionisierungsstrecke herausgeführt. Die ringförmig auf dem Umfang der Lampenhalterung 28 auf Lochkreisen unterschiedlichen Durchmessers verteilten Löcher 24 und 26 sind ausserdem gegeneinander versetzt, so dass das Licht nicht aus der Ionisierungsstrecke austreten kann. Die teilchenhaltige Luft strömt nun über ein elektrisches Abschirmgitter 30 durch ein auf einem Isolator 32 gehaltenes Filter 34, welches alle Teilchen auffängt. Falls einige Teilchen eine positive Ladung tragen, kann an der Elektrode 36 eine positive elektrische Ladung oder ein positiver elektrischer Strom abgegriffen werden, welcher nach entsprechender Verstärkung zur kontinuierlichen oder punktweisen automatischen oder manuellen Regulierung der Luftzahl λ dient. Das Gebläse 38 erzeugt einerseits sowohl den Strom der durch das Filter 18 gereinigten Aussenluft, als auch den Abgasstrom durch das Ansaugrohr 4. Es ist wiederum durch das Netz 40 vom Filterraum elektrisch getrennt. Länge und Durchmesser des Ansaugrohres 4 bestimmen massgeblich das Mischungverhältnis Abgas/ Aussenluft. Der Teilstrom des Abgases und/oder die Intensität und/oder die Länge der Quecksilberniederdruckentladung 20 sowie der Durchmesser des Rohres 14 werden so gewählt, dass das Signal an geladenen Teilchen ausreichend gross ist, d.h. zuverlässig gemessen und in einem an sich bekannten Regelkreis weiter ausgewertet werden kann, um die Luftzahl λ zu regulieren.

Es versteht, sich das durch entsprechende Umgestaltung der hier beschriebenen Anordnung weitere Anwendungsgebiete für das erfindungsgemässe Verfahren erschlossen werden können, z.B. auf dem Gebiet von Fahrzeugmotoren oder anderer Wärmekraftmaschinen.

**Patentansprüche**

1. Verfahren zur Regelung von Verbrennungsprozessen, bei welchem zumindest ein Teil des Verbrennungs-Abgases an einer Ultraviolett-Lampe vorbeigeführt wird, wobei die Menge der durch die Strahlung der Ultraviolett-Lampe erzeugten positiven und/oder negativen Ladungsträger bzw. der durch diese Ladungen erzeugte Strom gemessen wird und bei welchem das Sauerstoff-Brennstoff-Mischungsverhältnis in Abhängigkeit des erhaltenen Messwertes bzw. der erhaltenen Messwerte geregelt wird, dadurch gekennzeichnet, dass als Ultraviolett-Lampe eine solche verwendet wird, welche zur Ionisierung von im Verbrennungs-Abgas auftretenden Schwebeteilchen ultraviolettes Licht mit einer Photonenenergie liefert, die im wesentlichen derjenigen einer Quecksilber-Niedrucklampe entspricht und dass dem genannten Teil des Abgases vor seiner Bestrahlung ein lichtelektrisch inertes Gas zugeführt wird und zwar derart, dass beide Gase den Bereich neben der Ultraviolette-Lampe paralel zueinander laminar durchströmen, wobei der Strom des lichtelektrisch inerten Gases die auf Verschmutzung empfindliche Ultraviolett-Lampe vom Strom des Abgases trennt.

2. Verfahren nach Anspruch 1, dadurch gekennzeichnet, dass zumindest derjenige Teil des Abgases, der der Bestrahlung durch die Ultraviolett-Lampe ausgesetzt wird, vorgängig dieser Bestrahlung abgekühlt wird.

3. Verfahren nach Anspruch 2, dadurch gekennzeichnet, dass der genannte Teil des Abgases unter den Taupunkt abgekühlt wird und die anfallenden Kondensate entfernt werden, bevor das Abgas der Bestrahlung durch die Ultraviolett-Lampe ausgesetzt wird.

4. Verfahren nach einem der Ansprüche 1 bis 3, dadurch gekennzeichnet, dass ein Grössenbereich der im Abgas entaltenen Schwebeteilchen aus dem Abgas herausfiltriert wird, bevor das Abgas der Bestrahlung durch die Ultraviolett-Lampe ausgesetzt wird.

5. Verfahren nach einem der Ansprüche 1 bis 43, dadurch gekennzeichnet, dass bereits vorgeladene Schwebeteilchen aus dem Abgas entfernt werden, bevor es der Bestrahlung durch die Ultraviolett-Lampe ausgesetzt wird.

6. Verfahren nach einem oder mehreren der vorangehenden der Ansprüche, dadurch gekennzeichnet, dass zuminded dem genannten Teil des Abgases vor seiner Bestrahlung ein lichtelektrisch inertes Gas zugeführt wird und zwar derart, dass auch andere auf Verschmutzung, Korrosion oder dgl. empfindliche Teile als die Lampe, z.B. elektrische Isolatoren usw. vom Strom des Abgases nicht berührt werden.

7. Verfahren nach Anspruch 1 oder 6, dadurch gekennzeichnet, dass das lichtelektrisch inerte Gas normale oder vorgereinigte Luft ist.

8. Verfahren nach einem oder mehreren der vorangehenden Ansprüche, dadurch gekennzeichnet, dass die durch lichtelektrische Ladungstrennung erzeugten, positiven und negativen Ladungsträger nach ihrer Grösse sortiert und einem Messwertaufnehmer zugeführt werden, so dass nur eine bestimmte Ladungs- oder Grössenklasse bzw. ein Ausschnitt aus dem Grössenspektrum vom Messwertaufnehmer erfasst wird.

9. Verfahren nach Anspruch 8, dadurch gekennzeichnet, dass die Sortierung mit Hilfe von Trägheitskräften, in einer Diffusionsstrecke und/oder mittels eines elektrischen Gleich- oder Wechselfeldes erfolgt.

10. Verfahren nach einem oder mehreren der vorangehenden Ansprüche, dadurch gekennzeichnet, dass die als Messwertgrösse herangezogene, relative oder absolute Menge der erzeugten Ladungsträger und/oder die relative oder absolute Grösse des durch diese Ladungsträger erzeugten Stromes in Abhängigkeit vom Verbrennungsvorgang und/oder vom Brennstoff verändert wird.

11. Verfahren nach einem der Ansprüche 1 bis 10, dadurch gekennzeichnet, dass die Ultraviolett-Lampe im wesentlichen ultraviolettes licht mit einer Photoenergie von 4,9 eV liefert.

**Revendications**

1. Procédé pour la régulation de processus de combustion dans lequel une partie au moins des gaz de combustion passe devant une lampe ultraviolette, la quantité de supports de charge positifs et/ou négatifs, produits par le rayonnement de la lampe ultraviolette, ou du courant produit par ces charges, étant mesurée et les proportions du mélange oxygène-combustible étant réglées en fonction de la ou des valeur(s) mesurées, caractérisé en ce qu'on utilise comme lampe ultraviolette une lampe pour l'ionisation de particules en suspension dans les gaz de combustion, qui fournit une lumière ultraviolette avec une énergie photonique qui correspond à peu près à celle d'une lampe à mercure basse pression et en ce qu'on envoie un gaz photo-électriquement inerte à la partie citée des gaz brûlés, avant leur exposition au rayonnement, de manière que les deux gaz traversent de façon laminaire et parallèlement entre eux, a région située à côté de la lampe ultraviolette, le flux du gaz photo-électriquement inerte séparant la lampe ultraviolette sensible à la pollution, du flux des gaz brûlés.

2. Procédé selon la revendication 1, caractérisé en ce qu'au moins la partie des gaz brûlés qui et exposée au rayonnement de la lampe ultraviolette, est refroidie préalablement à cette exposition.

3. Procédé selon la revendication 2, caractérisé en ce que la partie citée des gaz brûlés est refroidie au-dessous du point de rosée et en ce qu'on élimine les condensats produits, avant d'exposer les gaz brûlés au rayonnement de la lampe ultraviolette.

4. Procédé selon l'une quelconque des revendications 1 à 3, caractérisé en ce qu'on élimine des gaz brûlés, un domaine de grosseur des particules en suspension dans ceux-ci, avant que les gaz brûlés ne soient exposés au rayonnement de la lampe ultraviolette.

5. Procédé selon l'une quelconque des revendications 1 à 4, caractérisé en ce qu'on élimine des gaz brûlés les particules en suspension déjà préchargées, avant leur exposition au rayonnement de la lampe ultraviolette.

6. Procédé selon une ou plusieurs des revendications ci-dessus, caractérisé en ce qu'on envoie un gaz photo-électriquement inerte à au moins la partie citée des gaz brûlés, avant leur exposition, de manière que d'autres éléments que la lampe, par exemple des isolateurs électriques, etc., sensibles à la pollution, à la corrosion ou similaire, ne soient pas en contact avec le flux des gaz brûlés.

7. Procédé selon la revendication 1 ou 6, caractérisé en ce que le gaz photo-électriquement inerte et de l'air normal ou préalablement épuré.

8. Procédé selon une ou plusieurs des revendications ci-dessus, caractérisé en ce que les supports de charge positifs et négatifs, produits par la séparation photo-électrique de charge, sot triés suivant leurs dimensions et envoyés à un transducteur de manière qu'une seule classe déterminée de charge ou de dimension, ou une partie du spectre de dimension, soit enregistrée par le transducteur.

9. Procédé selon la revendication 8, caractérisé en ce que le tri s'effectue à l'aide de forces d'inertie, dans un parcours de diffusion et/ou à l'aide d'un champ électrique continu ou alternatif.

10. Procédé selon une ou plusieurs des revendications ci-dessus, caractérisé en ce qu'on fait varier la quantité, relative ou absolue, des supports de charge produits et/ou la grandeur relative ou absolue du courant produit par ces supports de charge, utilisée comme grandeur de valeur mesurée, en fonction du processus de combustion et/ou du combustible.

11. Procédé selon l'une quelconque des revendications 1 à 10, caractérisé en ce que la lampe ultraviolette fournit une lumière essentiellement ultraviolette avec une énergie photonique de 4, 3 eV.

## Claims

1. Method for regulating combustion processes, in which at least part of the combustion waste gas is moved passed an ultraviolet lamp, in which the quantity of the positive and/or negative charge carriers produced by the radiation of the ultraviolet lamp or the current produced by these charges is measured and in which the oxygen-fuel mixing ratio is regulated as a function of the measured value or values obtained, characterized in that the ultraviolet lamp used is of the type which, for ionizing suspended particles occurring in the combustion waste gas, supplies ultraviolet light with a photon energy, which essentially corresponds to that of a low pressure mercury vapour lamp and that prior to its irradiation a photoelectrically inert gas is supplied to said waste gas part in such a way that both gases flow in laminar form and parallel to one another through the area alongside the ultraviolet lamp and the flow of photoelectrically inert gas isolates the contamination-sensitive ultraviolet lamp from the exhaust gas flow.

2. Method according to claim 1, characterized in that at least that part of the waste gas which is exposed to irradiation by the ultraviolet lamp is cooled prior to said irradiation.

3. Method according to claim 2, characterized in that said part of the waste gas is cooled below the dew point and the condensates obtained are removed before the waste gas is exposed to irradiation by the ultraviolet lamp.

4. Method according to one of the claims 1 to 3, characterized in that a size range of the suspended particles contained in the waste gas is filtered out of the latter before the waste gas is exposed to irradiation by the ultraviolet lamp.

5. Method according to one of the claims 1 to 4, characterized in that already precharged suspended particles are removed from the waste gas before it is exposed to irradiation by the ultraviolet lamp.

6. Method according to one or more of the preceding claims, characterized in that, prior to its irradiation, a photoelectrically inert gas is supplied to said part of the waste gas in such a way that parts, other than the lamp, which are sensitive to contamination, corrosion, etc., e.g. electrical insulators, etc. are not affected by the waste gas flow.

7. Method according to claims 1 or 6, characterized in that the photoelectrically inert gas is normal or prepurified air.

8. Method according to one or more of the preceding claims, characterized in that the positive and negative charge carriers produced by photoelectric charge separation are sorted as a function of their size and supplied to a sensor, so that only a specific charge or size class or part of the size spectrum is covered by the sensor.

9. Method according to claim 8, characterized in that sorting takes place with the aid of inertia forces in a diffusion path and/or by means of a d.c. or a.c. field.

10. Method according to one or more of the preceding claims, characterized in that the relative or absolute quantity of the charge carriers produced and/or the relative or absolute size of the flow produced by said charge carriers used as a measured value quantity is modified as a function of the combustion process and/or the fuel.

11. Method according to one of the claims 1 to 10, characterized in that the ultraviolet lamp essentially supplies ultraviolet light with a photon energy of 4.3 eV.